# EUROPEAN PATENT SPECIFICATION

(11) **EP 3 570 661 B1**
(45) Date of publication and mention of the grant of the patent: **13.10.2021**
(21) Application number: 18705728.6
(22) Date of filing: 19.01.2018
(51) Int. Cl.: A01G 18/20, A01G 18/62, A01G 18/70

(54) **PROCEDURE FOR THE CULTIVATION OF MUSHROOMS**
VERFAHREN ZUR KULTIVIERUNG VON PILZEN
PROCÉDURE POUR LA CULTURE DE CHAMPIGNONS

(30) Priority: 20.01.2017 IT 201700006102
(43) Date of publication of application: 27.11.2019
(73) Proprietor: Centro Servizi e Tecnologie Ambientali S.r.l., 45030 Salara (RO) (IT)
(72) Inventor: TIRELLI, Gianfranco, 45030 Salara (RO) (IT)
(74) Representative: Luppi, Emanuele
(86) International application number: PCT/IB2018/050346
(87) International publication number: WO 2018/134780

(56) References cited:
- FR-A1- 2 603 767
- GB-A- 2 181 122
- GB-A- 2 265 153
- JP-A- 2006 325 513
- JP-A- 2006 345 710
- US-A- 4 152 868

## Description

### Technical Field

The present invention relates to a procedure for the cultivation of mushrooms.

### Background Art

The intensive cultivation is known of mushrooms of different varieties for food use.

The procedures for the cultivation of commonly-used mushrooms provide for a first stage of preparation of a fructification bed by means of a substrate, the composition of which differs according to the variety of mushrooms to be grown.

The substrate then undergoes a pasteurization process, which exploits heat by solar irradiation or injection of water vapor to eliminate harmful organisms.

Finally, the substrate, in which the mycelia are inoculated, is placed on beds, irrigated and kept at controlled air temperature and humidity for a period of time, the duration of which varies according to the variety of the mycelium, in order to have an adequate incubation period.

At the end of the incubation period, the production period begins, in which the growth of the mushrooms occurs, and ends with the harvesting stage.

Both during the production stages and during the harvesting stages, an accurate control of air temperature and humidity is necessary.

In order to maintain correct levels of humidity in the air and in the substrate, a suspended irrigation system is set up, which allows short and repeated spraying operations with water.

The methods for the cultivation of traditional mushrooms are not, however, without drawbacks.

The harvested mushrooms often show imperfections and anomalies (marks, deformations, stunted growth) caused mainly by bacteria, molds and viruses of various kinds.

These imperfections compromise the integrity and quality of the mushrooms, resulting in a high percentage of waste product and, therefore, a considerable loss in economic terms.

Although these methods involve a pasteurization phase of the substrate, this does not generally guarantee complete disinfection, with consequent proliferation of microorganisms.

Plant protection products, insecticides and fungicides are commonly used to prevent the occurrence of such problems, which can cause damage to health.

A particular problem that is often found in the intensive cultivation of mushrooms is the proliferation of infesting fungal species, such as Mycogone. This is a parasitic fungus which spreads its spores and quickly invades the entire surface of the fructification bed, leaving no room for the growth of the desired mushrooms.

Such fungi are extremely difficult to eradicate despite the use of plant protection products.

Furthermore, the use of pesticides, plant protection products and products containing heavy metals for all kinds of crops has led to the progressive pollution of groundwater, rivers, lakes and surface waters.

Such waters are then used for mushroom cultivation, resulting in contamination of the end product.

Some methods for cultivating mushrooms are disclosed in the patent documents GB2181122A, JP2006345710A, JP2006325513A, US4152868A, GB2265153A.

### Description of the Invention

The main aim of the present invention is to devise a procedure for the cultivation of mushrooms which allows obtaining a final product with high quality characteristics, thus eliminating the use of plant protection products, insecticides and fungicides of all kinds.

Another object of the present invention is to devise a procedure for the cultivation of mushrooms which allows obtaining a smaller percentage of deteriorated product and an increase in the duration of the storage period.

A further object of the present invention is to devise a procedure for the cultivation of mushrooms which allows eliminating the contamination of the products due to the water used in the various phases of the cultivation itself.

Another object of the present invention is to provide a procedure for the cultivation of mushrooms which allows overcoming the aforementioned drawbacks of the prior art within the scope of a simple, rational, easy, efficient to use and cost-effective solution.

The aforementioned objects are achieved by the present procedure for the cultivation of mushrooms according to claim 1.

### Brief Description of the Drawings

The scope of the present invention is limited by the appended claims. Other characteristics and advantages of the present invention will become more evident from the description of a preferred
embodiment of a procedure for the cultivation of mushrooms, illustrated by way of a non-limiting example, in the attached drawings in which:

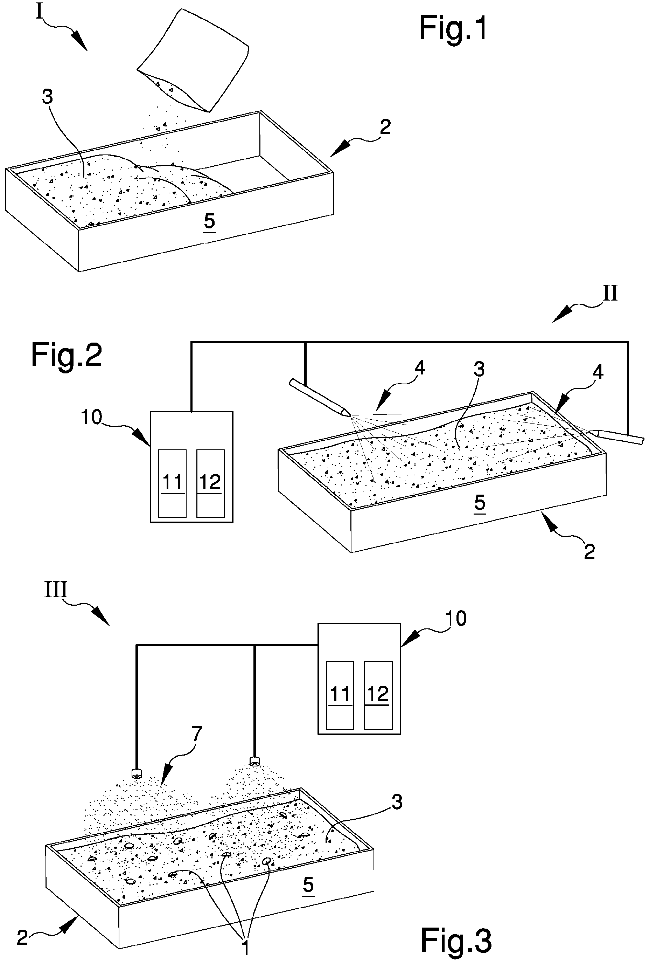

Figure 1 is an axonometric view illustrating the step of preparing a substrate bed containing mycelia provided for by the procedure according to the invention;
Figure 2 is an axonometric view of the step of mixing water with chlorine dioxide and of the step of wetting the substrate provided for by the procedure according to the invention;
Figure 3 is an axonometric view of the step of growing the mushrooms provided for by the procedure according to the invention;

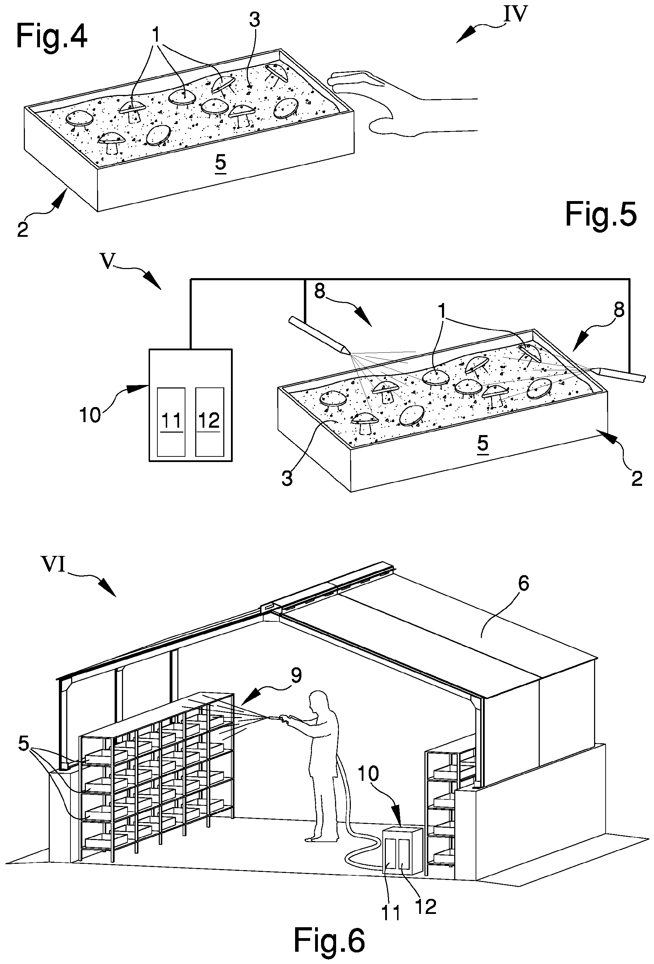

Figure 4 is an axonometric view of the step of harvesting the mushrooms provided for by the procedure according to the invention;
Figure 5 is an axonometric view of the step of irrigating provided for by the procedure according to the invention;
Figure 6 is a front view of the step of washing provided for by the procedure according to the invention.

### Embodiments of the Invention

The procedure for the cultivation of mushrooms 1 comprises at least the following steps:
- a step I of preparing at least a bed 2 of at least a substrate 3 for the growth of mushrooms 1 containing mycelia;
- a step II of wetting the substrate 3 with dampening water 4;
- a step III of growing the mushrooms 1; and
- a step IV of harvesting the mushrooms 1.

The dampening water 4 used in the step II of wetting is water added with chlorine dioxide.

The procedure according to the invention in fact comprises the preliminary step of mixing water with chlorine dioxide in order to obtain the dampening water 4. Chlorine dioxide is a substance with a considerable oxidizing power and is used for water disinfection and purification, being also very effective against pathogenic bacteria resistant to different viruses.

Furthermore, chlorine dioxide is effective in removing pollutants such as heavy metals, leaves no traces of smell or taste in the water and has the big advantage of not being corrosive for pipes and equipment and of being effective even in low concentrations.

The use of dampening water 4 containing chlorine dioxide permits eliminating bacteria, molds, viruses, parasites, etc. from the substrate 3, so it is not necessary to use plant protection products, pesticides and fungicides.

The use of chlorine dioxide also makes it possible to obtain mushrooms of high quality, with a high added value and free of any chemical residue, and which can be placed on the market as an organic farming product.

It should be pointed out that by organic farming product is meant an agricultural product obtained without the use of plant protection products, pesticides, synthetic fertilizers, etc.

The step of mixing water with chlorine dioxide is carried out in a mixing plant 10 comprising a chlorine dioxide preparation and dosing unit 11 and a water demineralization unit 12.

The preparation and dosing unit 11 comprises a first pumping system, which sucks up hydrochloric acid in aqueous solution from a first can, and a second pumping assembly, which sucks up sodium chlorite in aqueous solution from a second can.

The two components are sent to a reactor in which they react with each other to form chlorine dioxide in a gaseous form, which is dissolved in water to obtain an aqueous solution of chlorine dioxide with a higher concentration than the desired one.

The water, to which chlorine dioxide is added, is at least partly treated by means of reverse osmosis processes.

Water treatment takes place in the demineralization unit 12, which operates by means of a reverse osmosis system.

Reverse osmosis is a purification method which allows the separation of water from the substances present in it, such as mineral salts, heavy metals, residues of pesticides, but also bacteria and other microorganisms, so that they do not contaminate the final product.

Inside the mixing plant 10, the water coming out of the demineralization unit 12 is mixed with the aqueous solution containing chlorine dioxide coming out of the preparation and dosing unit 11 in such quantities as to obtain the dampening water 4.

The osmotized water, being devoid of dissolved substances, has a high detergent power and, in combination with chlorine dioxide, makes it possible to remove all the substances and powders attached to the mushrooms 1.

Usefully, the combined action of chlorine dioxide and water treated with reverse osmosis processes permits removing any trace of heavy metals from the mushrooms 1 growing on the substrate 3.

Generally, the substrate 3 used is made up of agricultural crop by-products, plant residues, sugar beet processing residues and manure, which are mixed in various proportions, depending on the type of mushroom 1 to be grown, moistened and allowed to ferment.

Preferably, during the step I of preparing, the substrate 3 is placed on a bedding 5 to form the bed 2.

Advantageously, the bed 2 is housed inside a greenhouse 6, where the procedure takes place.

According to the invention, the step II of wetting the substrate 3 comprises the use of a daily amount of dampening water 4 comprised between 10 and 20 liters per m² of said substrate 3.

The amount of dampening water 4 used is calibrated according to the initial humidity of the substrate 3.

This information is given by the supplier of the substrate 3 and depends on the variety of mushrooms 1 that are to be grown and on the type of substrate itself.

Preferably, the dampening water 4 comprises a concentration of chlorine dioxide comprised between 10 and 20 ppm.

Usefully, the step II of wetting the substrate 3 comprises four sprinkling stages per day, for three days, comprising at least two wetting operations for each sprinkling stage.

At the end of step II, the substrate 3 is sanitized and under optimal conditions for growing the mushrooms 1.

Usefully, the step III of growing the mushrooms 1 comprises the step of controlling the relative humidity of air inside the greenhouse 6 by atomizing spray water 7.

The spray water 7 comprises water mixed with chlorine dioxide at a concentration comprised between 2 and 4 ppm.

Such spray water 7 is produced inside the mixing plant 10, by mixing water and aqueous solution of chlorine dioxide which is concentrated in such a proportion as to obtain the specified concentration.

This spraying makes it possible to keep the environment sterile inside the greenhouse 6 after the transit of the operators who carry out the step IV of harvesting the mushrooms 1; moreover, the flow of the spray water 7 through the air ducting system makes it possible to eliminate all the microbial species, the spores and the molds responsible for the contamination phenomena.

The step IV of harvesting the mushrooms 1 comprises a plurality of crops, since mushrooms 1 do not all grow at the same speed, and therefore there is a need to differentiate the harvesting time based on the size of the mushrooms themselves.

Preferably, the step IV of harvesting the mushrooms 1 comprises at least a first crop, at least a second crop and at least a third crop.

The first crop is performed after 12 - 16 days from the end of the step of wetting the substrate 3, during which the step III of growing occurs.

Between one crop and another, instead, there is a time interval of 4-6 days, depending on the size of mushrooms 1 required by the market, during which the mushrooms 1 continue to grow.

The procedure comprises the step V of irrigating the substrate 3 after the first crop and after the second crop by means of irrigation water 8, using an amount of irrigation water comprised between 4 and 7 liters per m² of substrate 3, depending on the humidity of the substrate itself.

Usefully, such irrigation water 8 comprises water mixed with chlorine dioxide at a concentration comprised between 10 and 25 ppm.

Also in this case, spray water 7 is produced inside the mixing plant 10, by mixing water and aqueous solution of chlorine dioxide which is concentrated in such a proportion as to obtain the specified concentration.

The step V of irrigating with irrigation water 8 lasts one day and permits sanitizing the substrate 3 after each crop, thus eliminating any bacteria and mold that could proliferate and affect the quality of the mushrooms 1 which are harvested in the next crop.

The procedure finally comprises the step VI of washing the greenhouse 6 after the third crop by means of washing water 9.

After the third crop, in fact, the productivity of the substrate 3 is running out, so that the bed 2 is emptied from the substrate itself.

The washing water 9 comprises water mixed with chlorine dioxide at a concentration comprised between 3 and 6 ppm.

Also in this case the washing water 9 is produced inside the mixing plant 10. Subsequently, the step VI of washing the greenhouse 6 is carried out, so as to disinfect the environment by removing any possible micro-organisms, preparing it to again start cultivating the mushrooms 1.

### EXAMPLE 1

A substrate 3 was used having an initial humidity between 60% and 67%.

The step I of preparing the bed 2 of substrate 3 was carried out by means of a mechanical system which, through a hopper and a conveyor belt, pours the substrate onto the bedding 5 of the greenhouse 6.

Such operation lasts about 3 hours.

The step II of wetting the substrate 3 was performed according to the specifications shown on Table 1.

**Table 1**

| Fructification room No.1 | | | | |
|---|---|---|---|---|
| Day | Phase No. | Dampening operations no. | Water (1) | ClO₂ conc. (ppm) |
| 1 | 1 | 4 | 1200 | 16 |
| | 2 | 4 | 1200 | 14 |
| | 3 | 4 | 1200 | 14 |
| | 4 | 4 | 1200 | 18 |
| 2 | 1 | 4 | 1200 | 16 |
| | 2 | 4 | 1200 | 14 |
| | 3 | 4 | 1200 | 14 |
| | 4 | 4 | 1200 | 18 |
| 3 | 1 | 4 | 1200 | 16 |
| | 2 | 4 | 1200 | 16 |
| | 3 | 4 | 1200 | 16 |
| | 4 | 4 | 1200 | 18 |
| Initial humidity of substrate | | | | 60 ÷ 67% |
| Share of water per m² at each dampening operation | | | | 1.144 l/m² |
| Daily share of water per m² | | | | 18.30 l/m² |
| Total share of water per m² | | | | 54.92 l/m² |

Four spraying steps of four dampening operations each were carried out per day, over a total of three days.

Chlorine dioxide concentrations are higher on the third day than on the first two days, in order to achieve a gradual sanitization of the substrate 3, without compromising the productivity thereof.

During the step III of growing the mushrooms 1, the temperature was maintained between 18 and 20°C by means of an air conditioning system. Relative humidity inside the greenhouse 6 was also maintained at between 90% and 94%, by spraying spray water 7 having a chlorine dioxide concentration of between 2 and 4 ppm.

The step IV of harvesting the mushrooms 1 was carried out in three crops, lasting 1 ÷ 2 days each.

The first crop was carried out between 15 and 16 days from the beginning of the cultivation cycle; the second crop was carried out after 4 ÷ 7 days from the first one and the third crop after 4 ÷ 7 days from the second one.

After the first crop and after the second crop, the step V of irrigating the substrate was carried out with irrigation water 8, according to the specifications shown on Table 2.

**Table 2**

| Crop | Phase No. | Dampening operations no. | Water (1) | C10₂ conc. (ppm) |
|---|---|---|---|---|
| 1 | 1 | 2 | 600 | 14 |
| | 2 | 2 | 600 | 14 |
| | 3 | 2 | 600 | 14 |
| 2 | 1 | 2 | 600 | 18 |
| | 2 | 2 | 600 | 18 |
| | 3 | 2 | 600 | 20 |
| Share of water per m² at each dampening operation | | | | 1.144 l/m² |
| Total share of water per m² | | | | 13.73 l/m² |

Three irrigation steps of two dampening operations each were carried out, lasting one day.

The concentration of chlorine dioxide used is higher in the step V of irrigating carried out after the second crop, because after each crop the load of microorganisms and the possibility of the substrate 3 being contaminated by bacteria and molds increases.

It has been observed that the organoleptic characteristics of the mushrooms 1 cultivated this way are better than those of products obtained using traditional type cultivation methods.

The product obtained appears aesthetically superior, well cleaned, shiny, bright white in color and with a turgid and substantial body.

Consequently, by complying with the correct practices and hygienic rules during harvesting and packaging, it can be stated that the product obtained has the characteristics of ready-prepared fresh produce.

There was a significant decrease in the phenomena of visible alterations on the surface, such as stains, yellowing, etc.

The significant reduction in these alterations results in a significant reduction in the bacterial diseases, mold and parasites that cause them.

These results go to show that the disinfectant action of chlorine dioxide produces an extremely effective sanitizing action both on the substrate 3 and on the growing mushrooms 1, eliminating the antagonist species responsible for altering the product.

### EXAMPLE 2

A substrate 3 was used having an initial humidity between 67% and 80% and was poured onto the bedding 5 of the greenhouse 6, similarly to the procedure followed for example 1.

The step II of wetting the substrate 3 was performed for three days according to the specifications shown on Table 3.

**Table 3**

| Fructification room No.2 | | | | |
|---|---|---|---|---|
| Day | Phase No. | Dampening operations no. | Water (1) | C10₂ conc. (ppm) |
| 1 | 1 | 2 | 600 | 16 |
| | 2 | 2 | 600 | 16 |
| | 3 | 2 | 600 | 18 |
| | 4 | 4 | 1200 | 18 |
| 2 | 1 | 2 | 600 | 16 |
| | 2 | 2 | 600 | 16 |
| | 3 | 2 | 600 | 18 |
| | 4 | 4 | 1200 | 18 |
| 3 | 1 | 2 | 600 | 16 |
| | 2 | 2 | 600 | 16 |
| | 3 | 2 | 600 | 18 |
| | 4 | 4 | 1200 | 18 |
| Initial humidity of substrate | | | | 67 ÷ 80% |
| Share of water per m² at each dampening operation | | | | 1.144 Lt/m² |
| Daily share of water per m² | | | | 11.44 Lt/m² |
| Total share of water per m² | | | | 34.32 Lt/m² |

In this case, the chlorine dioxide concentrations were maintained unchanged on each day.

The step III of growing and the step IV of harvesting the mushrooms 1 were performed exactly as in the Example 1, obtaining completely similar results.

It has in practice been found that the described invention achieves the intended objects.

In this regard, it should be pointed out that the particular expedient of providing for a step of mixing water with chlorine dioxide makes it possible to obtain an end product with high quality characteristics, eliminating the use of plant protection products, insecticides and fungicides of all kinds.

Furthermore, the particular expedient of providing for the use of dampening water comprising chlorine dioxide makes it possible to obtain a smaller percentage of deteriorated product and an increase in storage life.

Furthermore, the particular expedient of producing dampening water by means of reverse osmosis processes makes it possible to obtain an end product free of any chemical residue and pathogens.

Moreover, the particular expedient of providing for humidification by spraying dampening water permits eliminating microbial species, spores, viruses and molds, responsible for contamination, from the air ducts.

## Claims

1. Procedure for the cultivation of mushrooms (1) comprising at least the steps of:
- preparing (I) at least a bed (2) of at least a substrate (3) for the growth of mushrooms (1) containing mycelia;
- wetting (II) said substrate (3) with dampening water (4);
- growing (III) said mushrooms (1); and
- harvesting (IV) said mushrooms (1);
- mixing water with chlorine dioxide to obtain said dampening water (4); **characterized by** the fact that said wetting (II) comprises the use of a daily amount of said dampening water (4) comprised between 10 and 20 liters per m² of said substrate (3).

2. Procedure according to claim 1, **characterized by** the fact that said water is at least partly treated by means of reverse osmosis processes.

3. Procedure according to one or more of the preceding claims, **characterized by** the fact that said dampening water (4) comprises a concentration of chlorine dioxide comprised between 10 and 20 ppm.

4. Procedure according to one or more of the preceding claims, **characterized by** the fact that said wetting (II) said substrate (3) comprises four sprinkling stages per day, for three days, comprising at least two wetting operations for each of said sprinkling stages.

5. Procedure according to one or more of the preceding claims, **characterized by** the fact that said harvesting (IV) said mushrooms (1) comprises a plurality of crops.

6. Procedure according to claim 5, **characterized by** the fact that said harvesting (IV) said mushrooms (1) comprises at least a first crop, at least a second crop and at least a third crop.

7. Procedure according to claim 6, **characterized by** the fact that it comprises the step of irrigating (V) said substrate (3) after said first crop and after said second crop by means of irrigation water (8) comprising water mixed with chlorine dioxide at a concentration comprised between 10 and 25 ppm, using an amount of said irrigation water (8) comprised between 4 and 7 liters per m² of said substrate (3).

8. Procedure according to one or more of the preceding claims, **characterized by** the fact that it takes place in a greenhouse (6) and by the fact that said growing (III) comprises the step of controlling the relative humidity of air inside said greenhouse (6) by atomizing spray water (7) comprising water mixed with chlorine dioxide at a concentration comprised between 2 and 4 ppm.

9. Procedure according to claims 6 and 8, **characterized by** the fact that it comprises the step of washing (VI) said greenhouse (6) after said third crop by means of washing water (9) comprising water mixed with chlorine dioxide at a concentration comprised between 3 and 6 ppm.

## Patentansprüche

1. Verfahren zur Kultivierung von Pilzen (1), welches mindestens die folgenden Schritte umfasst:
- Vorbereitung (I) von mindestens einem Bett (2) aus mindestens einem Substrat (3) für das Wachstum von Pilzen (1), die Myzelien enthalten;
- Benetzen (II) des Substrats (3) mit Befeuchtungswasser (4);
- Züchten (III) der Pilze (1); und
- Ernten (IV) der Pilze (1);
- Mischen von Wasser mit Chlordioxid, um das Befeuchtungswasser (4) zu erhalten;
**dadurch gekennzeichnet, dass** das Benetzen (II) die Verwendung einer täglichen Menge des Befeuchtungswassers (4) umfasst, die zwischen 10 und 20 Litern pro m² des Substrats (3) liegt.

2. Verfahren nach Anspruch 1, **dadurch gekennzeichnet, dass** das Wasser zumindest teilweise durch Umkehr-Osmose-Verfahren behandelt wird.

3. Verfahren nach einem oder mehreren der vorhergehenden Ansprüche, **dadurch gekennzeichnet, dass** das Befeuchtungswasser (4) eine Chlordioxidkonzentration zwischen 10 und 20 ppm aufweist.

4. Verfahren nach einem oder mehreren der vorhergehenden Ansprüche, **dadurch gekennzeichnet, dass** das Benetzen (II) des Substrats (3) vier Beregnungsschritte pro Tag über drei Tage umfasst, welche mindestens zwei Benetzungsvorgänge für jeden der Beregnungsschritte umfassen.

5. Verfahren nach einem oder mehreren der vorhergehenden Ansprüche, **dadurch gekennzeichnet, dass** das Ernten (IV) der Pilze (1) eine Vielzahl von Erntedurchgängen umfasst.

6. Verfahren nach Anspruch 5, **dadurch gekennzeichnet, dass** die Ernte (IV) der Pilze (1) mindestens einen ersten Erntedurchgang, mindestens einen zweiten Erntedurchgang und mindestens einen dritten Erntedurchgang umfasst.

7. Verfahren nach Anspruch 6, **dadurch gekennzeichnet, dass** es den Schritt des Bewässerns (V) des Substrats (3) nach dem ersten Erntedurchgang und nach dem zweiten Erntedurchgang mittels Bewässerungswasser (8) umfasst, welches Wasser enthält, welches mit Chlordioxid in einer Konzentration zwischen 10 und 25 ppm gemischt ist, wobei eine Menge des Bewässerungswassers (8) verwendet wird, die zwischen 4 und 7 Litern pro m² des Substrats (3) liegt.

8. Verfahren nach einem oder mehreren der vorhergehenden Ansprüche, **dadurch gekennzeichnet, dass** es in einem Gewächshaus (6) erfolgt und
dass das Züchten (III) den Schritt der Steuerung der relativen Luftfeuchtigkeit im Inneren des Gewächshauses (6) durch Zerstäuben von Sprühwasser (7) umfasst, welches mit Chlordioxid vermischtes Wasser in einer Konzentration zwischen 2 und 4 ppm enthält.

9. Verfahren nach den Ansprüchen 6 und 8, **dadurch gekennzeichnet, dass** es den Schritt der Reinigung (VI) des Gewächshauses (6) nach dem dritten Erntedurchgang mittels Reinigungswasser (9) umfasst, welches mit Chlordioxid gemischtes Wasser in einer Konzentration zwischen 3 und 6 ppm enthält.

## Revendications

1. Procédure pour la culture de champignons (1) comprenant au moins les étapes de :
- préparation (I) d'au moins un lit (2) d'au moins un substrat (3) pour la croissance de champignons (1) contenant des mycéliums ;
- mouillage (II) dudit substrat (3) avec de l'eau de mouillage (4) ;
- croissance (III) desdits champignons (1) ; et
- cueillette (IV) desdits champignons (1) ;
- mélange de l'eau avec du dioxyde de chlore pour obtenir ladite eau de mouillage (4) ; **caractérisée par le fait que** ledit mouillage (II) comprend l'utilisation d'une quantité quotidienne de ladite eau de mouillage (4) comprise entre 10 et 20 litres par m² dudit substrat (3).

2. Procédure selon la revendication 1, **caractérisée par le fait que** ladite eau est au moins partiellement traitée au moyen de processus d'osmose inverse.

3. Procédure selon une ou plusieurs des revendications précédentes, **caractérisée par le fait que** ladite eau de mouillage (4) comprend une concentration de dioxyde de chlore comprise entre 10 et 20 ppm.

4. Procédure selon une ou plusieurs des revendications précédentes, **caractérisée par le fait que** ledit mouillage (II) dudit substrat (3) comprend quatre stades d'aspersion par jour, pendant trois jours, comprenant au moins deux opérations de mouillage pour chacun desdits stades d'aspersion.

5. Procédure selon une ou plusieurs des revendications précédentes, **caractérisée par le fait que** ladite cueillette (IV) desdits champignons (1) comprend une pluralité de récoltes.

6. Procédure selon la revendication 5, **caractérisée par le fait que** ladite cueillette (IV) desdits champignons (1) comprend au moins une première récolte, au moins une deuxième récolte et au moins une troisième récolte.

7. Procédure selon la revendication 6, **caractérisée par le fait qu'**elle comprend l'étape d'irrigation (V) dudit substrat (3) après ladite première récolte et après ladite deuxième récolte au moyen d'une eau d'irrigation (8) comprenant de l'eau mélangée avec du dioxyde de chlore à une concentration comprise entre 10 et 25 ppm, en utilisant une quantité de ladite eau d'irrigation (8) comprise entre 4 et 7 litres par m² dudit substrat (3).

8. Procédure selon une ou plusieurs des revendications précédentes, **caractérisée par le fait qu'**elle a lieu dans une serre (6) et **par le fait que** ladite croissance (III) comprend l'étape de régulation de l'humidité relative de l'air à l'intérieur de ladite serre (6) en atomisant de l'eau de pulvérisation (7) comprenant de l'eau mélangée avec du dioxyde de chlore à une concentration comprise entre 2 et 4 ppm.

9. Procédure selon les revendications 6 et 8, **caractérisée par le fait qu'**elle comprend l'étape de lavage (VI) de ladite serre (6) après ladite troisième récolte au moyen d'une eau de lavage (9) comprenant de l'eau mélangée avec du dioxyde de chlore à une concentration comprise entre 3 et 6 ppm.
